# EUROPÄISCHE PATENTSCHRIFT

(11) **EP 3 221 171 B1**
(45) Veröffentlichungstag und Bekanntmachung des Hinweises auf die Patenterteilung: **20.01.2021**
(21) Anmeldenummer: 15797309.0
(22) Anmeldetag: 18.11.2015
(51) Int. Cl.: B60K 11/04, B60H 1/00, F01P 3/18

(54) **BAUGRUPPE ZUR KÜHLUNG EINES KRAFTFAHRZEUGMOTORS MIT EINEM KÜHLMODUL EINER FAHRZEUGKLIMAANLAGE**
ASSEMBLY FOR COOLING A MOTOR VEHICLE ENGINE, COMPRISING A COOLING MODULE OF A VEHICLE AIR-CONDITIONING SYSTEM
ENSEMBLE POUR LE REFROIDISSEMENT D'UN MOTEUR DE VÉHICULE AUTOMOBILE, COMPRENANT UN MODULE DE REFROIDISSEMENT D' UNE INSTALLATION DE CLIMATISATION DE VÉHICULE

(30) Priorität: 20.11.2014 DE 102014117007
(43) Veröffentlichungstag der Anmeldung: 27.09.2017
(73) Patentinhaber: Valeo Klimasysteme GmbH, 96476 Rodach (DE)
(72) Erfinder: HAUSSMANN, Roland, 96476 Bad Rodach (DE)
(74) Vertreter: Prinz & Partner mbB
(86) Internationale Anmeldenummer: PCT/EP2015/076977
(87) Internationale Veröffentlichungsnummer: WO 2016/079187

(56) Entgegenhaltungen:
- EP-A1- 0 870 634
- CN-U- 201 881 882
- DE-A1-102014 201 991
- DE-C1- 3 825 071
- GB-A- 2 326 626
- JP-A- 2007 137 195
- JP-U- S 601 918

## Beschreibung

Die Erfindung betrifft eine Baugruppe zur Kühlung eines Kraftfahrzeugmotors, insbesondere eines LKW-Motors gemäß dem Oberbegriff des Anspruchs 1.

Eine solche Kühlbaugruppe ist beispielsweise in der KR 10 2013 0101270 A offenbart, wobei der Kondensator der Fahrzeugklimaanlage stromaufwärts des Motorkühlers angeordnet ist. Der Kühlerventilator ist ein saugseitig angeordneter Axialventilator und wird üblicherweise durch den Kraftfahrzeugmotor angetrieben.

Die Kühlbaugruppe bildet in der KR 10 2013 0101270 A eine vormontierbare Einheit, wobei die Luftströmungsquerschnitte des Motorkühlers und des Kondensators etwa gleich groß sind. Um die zur Kühlung des Kraftfahrzeugmotors erforderliche Kühlleistung beispielsweise auch in einem Volllastbetrieb eines Lastkraftwagens (z.B. Bergauffahrt im beladenen Zustand) sicherzustellen muss der Luftströmungsquerschnitt des Motorkühlers recht groß sein. Ein Kondensator der Fahrzeugklimaanlage mit ähnlich großem Luftströmungsquerschnitt ist jedoch in der Regel überdimensioniert und entsprechend unwirtschaftlich.

Die gattungsgemäße JP 2007-137195 sowie auch die GB 2 326 626 A zeigen Kühlbaugruppen, bei denen der Luftauslass des Lüfters ausschließlich einem ersten Teilquerschnitt des Kondensators zugeordnet ist und diesen in Luftströmungsrichtung mit dem gesamten Luftstrom des Lüfters beaufschlagt, wobei ein luftdurchströmbarer Motorkühler in Luftströmungsrichtung stromabwärts des Kondensators angeordnet ist.

Insbesondere bei Lastkraftwagen gibt es zur Erhöhung des Insassenkomforts außerdem Bestrebungen, die Fahrzeugklimaanlage auch beim Parken, d.h. bei abgestelltem Kraftfahrzeugmotor, zu betreiben.

Aufgabe der Erfindung ist es, ein kompaktes Kühlmodul einer Fahrzeugklimaanlage sowie eine Baugruppe zur Kühlung eines Kraftfahrzeugmotors mit einem solchen Kühlmodul zu schaffen, wobei sich das Kühlmodul auch bei abgestelltem Kraftfahrzeugmotor äußerst energieeffizient betreiben lässt und die Baugruppe auch im Volllastbetrieb eine ausreichende Kühlleistung zum Kühlen des Kraftfahrzeugmotors bereitstellt.

Erfindungsgemäß wird diese Aufgabe gelöst durch eine Baugruppe mit den Merkmalen des Anspruchs 1. Bei parkendem Fahrzeug, d.h. bei abgestelltem Kraftfahrzeugmotor, ermöglicht der zweite Teilquerschnitt des Kondensators eine Rückströmung des vom Lüfter über den ersten Teilquerschnitt in der Luftströmungsrichtung durch den Kondensator beförderten Luftstroms. Diese über den zweiten Teilquerschnitt des Kondensators entgegen der Luftströmungsrichtung des Lüfters zurückrückströmende Luft kann erneut Wärmeenergie vom Kältemittel der Fahrzeugklimaanlage aufnehmen und trägt damit zu einem besonders energieeffizienten Betrieb des Kühlmoduls bei.

Der Kondensator des Kühlmoduls weist in der Luftströmungsrichtung einen Abstand d vom Motorkühler auf, wobei gilt: d > 6 mm, insbesondere 8 mm ≤ d ≤ 20 mm. Dieser Abstand reicht aus, um den in der Luftströmungsrichtung durch den ersten Teilquerschnitt des Kondensators geförderten Luftstrom stromabwärts des Kondensators zu verteilen sowie eine Rückströmung entgegen der Luftströmungsrichtung über den zweiten Teilquerschnitt des Kondensators zu ermöglichen. Der dadurch verringerte Strömungswiderstand des Kondensators trägt zu einem besonders energieeffizienten Betrieb des Kühlmoduls bei abgestelltem Kraftfahrzeugmotor bei.

Aufgrund der Möglichkeit, dass die vom Lüfter in der Luftströmungsrichtung durch den Kondensator geförderte Luft über den zweiten Teilquerschnitt wieder zumindest teilweise zurückströmen kann, sinkt im Übrigen auch der Druckverlust eines stromabwärts angeordneten Motorkühlers, da die in Luftströmungsrichtung durch den Kühler strömende Luftmenge abnimmt. Aufgrund des geringeren Gesamtdruckverlusts wird ein besonders energieeffizienter Betrieb des Kühlmoduls erreicht.

Gemäß einer Ausführungsform der Baugruppe ist der Lüfter ein elektromotorisch angetriebener Lüfter und weist bevorzugt eine maximale statische Druckdifferenz von höchstens 300 Pa auf. In diesem Leistungsbereich ist der Energiebedarf des Lüfters gering und der erzeugte Volumenstrom reicht zum Verflüssigen des Kältemittels der Fahrzeugklimaanlage aus. Der für den Antrieb des Lüfters verwendete Elektromotor bezieht seine Energie beispielsweise aus einer Fahrzeugbatterie, die aufgrund des geringen Energieverbrauchs eine zufriedenstellende Betriebsdauer der Fahrzeugklimaanlage bei parkendem Kraftfahrzeug sicherstellen kann.

Bevorzugt weist der Kondensator in Luftströmungsrichtung eine Abmessung tK auf, mit tK ≤ 20 mm, insbesondere 10 mm ≤ tK ≤ 16 mm. Diese geringe Abmessung in Luftströmungsrichtung führt in vorteilhafter Weise zu einem besonders geringen Strömungswiderstand und Gewicht des Kondensators. Die Kühlleistung eines solchen Kondensators ist bei abgestelltem Kraftfahrzeugmotor unter Umständen eingeschränkt, reicht jedoch aus, um auch bei abgestelltem Kraftfahrzeugmotor einen zufriedenstellenden Betrieb der Fahrzeugklimaanlage zu gewährleisten.

Gemäß einer weiteren Ausführungsform der Baugruppe sind der Lüfter und der Kondensator in einem Modulrahmen aufgenommen und bilden mit dem Modulrahmen eine vormontierte Einheit. Der Kondensator weist zum Beispiel Kältemittel-Sammelleitungen auf, die fest mit dem Modulrahmen verbunden, insbesondere verschraubt oder verspannt sind. Das als vormontierte Einheit ausgebildete Kühlmodul lässt sich mit geringem Aufwand an einer Baugruppe zur Kühlung eines Kraftfahrzeugmotors befestigen und kann bei Bedarf einfach ausgetauscht werden.

Bevorzugt weist der Modulrahmen in dieser Ausführungsform Vorsprünge zur Montage des Kühlmoduls an einem Motorkühler auf, wobei sich die Vorsprünge quer zur Luftströmungsrichtung erstrecken.

Ferner kann der Modulrahmen einen Luftkanal aufweisen, in welchem der Lüfter befestigt ist, wobei der Luftkanal den Lufteinlass und den Luftauslass des Lüfters definiert.

Gemäß einer bevorzugten Ausführungsform der Baugruppe ist der Modulrahmen ein Kunststoffspritzteil. Auf diese Weise lässt sich der Modulrahmen preiswert herstellen und in seiner Form einfach verändern. Das Kühlmodul kann daher mit besonders geringem Aufwand an unterschiedliche Randbedingungen einer bestimmten Fahrzeugserie angepasst werden, wenn nach Möglichkeit baugleiche Lüfter und Kondensatoren verwendet werden und lediglich die Form des Modulrahmens variiert.

Ferner ist bevorzugt, dass der Kondensator einen im Wesentlichen rechteckigen Luftströmungsquerschnitt mit einer Länge l sowie einer Breite b und der Lüfter wenigstens einen Axialventilator mit einem Durchmesser D aufweist, wobei gilt: 0,75 ≤ Dl/l ≤ 1, insbesondere 0,85 ≤ Dl/l ≤ 0,95 und/oder 0,75 ≤ Db/b ≤ 1, insbesondere 0,85 ≤ Db/b ≤ 0,95, wobei Dl und Db der Summe der Durchmesser D aller Lüfter entspricht, die in Richtung der Länge l bzw. Breite b des Kondensators nebeneinander angeordnet sind. Bei diesen Abmessungsverhältnissen ist der erste Teilquerschnitt des Luftströmungsquerschnitts deutlich größer als der zweite Teilquerschnitt, wobei die Geschwindigkeit des im zweiten Teilquerschnitt zurückströmenden Luftstroms etwa 50 % der Geschwindigkeit des im ersten Teilquerschnitt in Luftströmungsrichtung des Lüfters strömenden Luftstroms beträgt. Unter diesen Bedingungen wird eine besonders hohe Kühlleistung des Kühlmoduls bei geringem Energiebedarf erreicht.

Der Lufteinlass des Lüfters kann beispielsweise an einen Kühlergrill des Fahrzeugs angrenzen, insbesondere dicht mit dem Kühlergrill verbunden sein.

Im Übrigen kann der Luftauslass des Lüfters an den Kondensator angrenzen und insbesondere dicht mit dem Kondensator verbunden sein.

Die saugseitige Anordnung des Kühlerventilators ermöglicht einen einfachen und vorteilhaften Antrieb des Kühlerventilators durch den Kraftfahrzeugmotor. Der vom Kraftfahrzeugmotor angetriebene Kühlerventilator kann problemlos einen Volumenstrom bereitstellen, der auch im Volllastbetrieb des Kraftfahrzeugs eine ausreichende Kühlleistung des Motorkühlers gewährleistet. Außerdem wird über den Kühlerventilator auch der Kondensator in Luftströmungsrichtung beaufschlagt und ein ausreichender Volumenstrom zum Verflüssigen des Kältemittels der Fahrzeugklimaanlage bereitgestellt, sodass der Lüfter bzw. der Elektromotor zum Antreiben des Lüfters bei laufendem Kraftfahrzeugmotor abgestellt werden kann.

Gemäß einer Ausführungsform der Baugruppe zur Kühlung des Kraftfahrzeugmotors ist ein Montageelement vorgesehen, welches den Kühlerventilator mit dem Motorkühler verbindet. Insbesondere umschließt das Montageelement den Luftströmungsquerschnitt des Motorkühlers und verjüngt sich zum Kühlerventilator hin trichterförmig, sodass der Kühlerventilator den gesamten Luftströmungsquerschnitt saugseitig beaufschlagt.

Bevorzugt weist der Luftströmungsquerschnitt des Motorkühlers einen ersten Teilquerschnitt und einen vom ersten Teilquerschnitt verschiedenen zweiten Teilquerschnitt auf, wobei der erste Teilquerschnitt vom Kühlmodul abgedeckt ist und der zweite Teilquerschnitt frei an einen Kühlergrill des Fahrzeugs angrenzt. Der über den ersten Teilquerschnitt vom Kühlerventilator angesaugte Volumenstrom reicht dabei aus, um das Kältemittel der Fahrzeugklimaanlage im Kondensator zu verflüssigen und einen Fahrzeuginnenraum in gewünschter Weise zu klimatisieren. Gleichzeitig erfolgt über den ersten Teilquerschnitt des Luftströmungsquerschnitts des Motorkühlers auch eine gewisse Kühlung des Kühlmittels für den Kraftfahrzeugmotor. Über den zweiten Teilquerschnitt des Luftströmungsquerschnitts des Motorkühlers saugt der Kühlerventilator einen weiteren Volumenstrom an, der den Motorkühler, nicht jedoch den Kondensator durchströmt und daher eine besonders effiziente Kühlung des Kühlmittels für den Kraftfahrzeugmotor darstellt. Auf diese Weise lässt sich auch im Volllastbetrieb des Kraftfahrzeugs (z.B. Bergauffahrt im beladenen Zustand) eine ausreichende Kühlung des Kraftfahrzeugmotors sicherstellen.

Der Luftströmungsquerschnitt des Motorkühlers ist vorzugsweise wenigstens eineinhalbmal so groß, insbesondere wenigstens doppelt so groß wie der Luftströmungsquerschnitt des Kondensators. Wird der Luftströmungsquerschnitt des Kondensators so gewählt, dass sich sowohl bei laufendem als auch bei abgestelltem Kraftfahrzeugmotor eine zufriedenstellende Kühlleistung der Fahrzeugklimaanlage ergibt, dann lässt sich über das angegebene Größenverhältnis der Luftströmungsquerschnitte auch eine ausreichende Kühlung des Kraftfahrzeugmotors im Volllastbetrieb des Kraftfahrzeugs gewährleisten.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 eine schematische, perspektivische Explosionsansicht eines Kühlmoduls einer erfindungsgemäßen Baugruppe;
- Figur 2 eine schematische Schnittansicht einer erfindungsgemäßen Baugruppe zur Kühlung eines Kraftfahrzeugmotors mit einem Kühlmodul einer Fahrzeugklimaanlage;
- Figur 3 ein Detail III der Baugruppe gemäß Figur 2;
- Figur 4 eine Ansicht einer erfindungsgemäßen Baugruppe zur Kühlung eines Kraftfahrzeugmotors mit dem Kühlmodul gemäß Figur 1; und
- Figur 5 einen schematischen Detailschnitt durch die Baugruppe gemäß Figur 4.

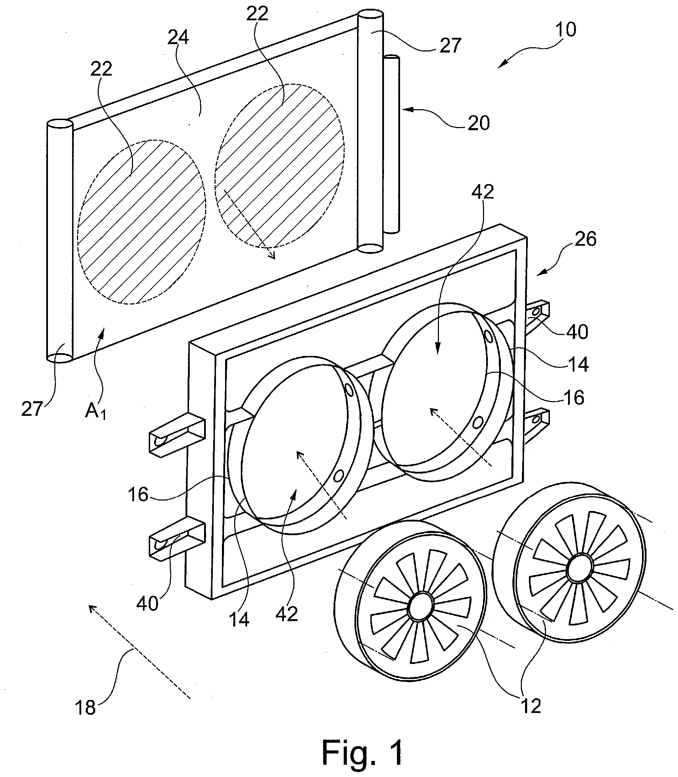

Die Figur 1 zeigt ein Kühlmodul 10 einer Fahrzeugklimaanlage, insbesondere für Lastkraftwagen, mit einem Lüfter 12, der einen Lufteinlass 14 sowie einen Luftauslass 16 aufweist und einen Luftstrom in einer Luftströmungsrichtung 18 vom Lufteinlass 14 zum Luftauslass 16 erzeugt, sowie einem bidirektional, d.h. in zwei entgegengesetzten Luftströmungsrichtungen durchströmbaren Kondensator 20 zum Verflüssigen eines Kältemittels der Fahrzeugklimaanlage, der einen Luftströmungsquerschnitt A1 aufweist und angrenzend an den Luftauslass 16 stromabwärts des Lüfters 12 angeordnet ist. In diesem Zusammenhang wird explizit darauf hingewiesen, dass sich Begriffe wie "stromabwärts" und "stromaufwärts" im Rahmen dieser Anmeldung stets auf die Luftströmungsrichtung 18 beziehen.

Der Lüfter 12 umfasst im vorliegenden Ausführungsbeispiel zwei Axialventilatoren auf und ist elektromotorisch angetrieben, wobei der Lüfter 12 eine maximale statische Druckdifferenz von höchstens 300 Pa bereitstellt.

Der Luftströmungsquerschnitt A1 des Kondensators 20 weist einen schraffiert dargestellten, ersten Teilquerschnitt 22 und außerhalb des schraffierten Bereichs einen vom ersten Teilquerschnitt 22 verschiedenen, zweiten Teilquerschnitt 24 auf, wobei der Luftauslass 16 des Lüfters 12 ausschließlich dem ersten Teilquerschnitt 22 zugeordnet ist und diesen in der Luftströmungsrichtung 18 mit dem gesamten Luftstrom des Lüfters 12 beaufschlagt, wobei der zweite Teilquerschnitt 24 im Betrieb des Lüfters 12 wahlweise in der Luftströmungsrichtung 18 des Lüfters 12 und entgegen der Luftströmungsrichtung 18 des Lüfters 12 durchströmbar ist.

Der Kondensator 20 weist in der Luftströmungsrichtung 18 eine Abmessung tK auf, mit tK ≤ 20 mm, insbesondere 10 mm ≤ tK ≤ 16 mm. Es hat sich herausgestellt, dass eine Abmessung in dieser Größenordnung einen besonders guten Kompromiss zwischen kleinstmöglichem Strömungswiderstand und größtmöglicher Kühlleistung darstellt.

Gemäß Figur 1 umfasst das Kühlmodul 10 der Fahrzeugklimaanlage einen Modulrahmen 26, wobei sowohl der Lüfter 12 als auch der Kondensator 20 in dem Modulrahmen 26 aufgenommen sind und zusammen mit dem Modulrahmen 26 eine vormontierte Einheit bilden.

Der Modulrahmen 26 ist insbesondere ein Kunststoffspritzteil, welches preiswert herstellbar ist und fertigungstechnisch mit geringem Aufwand an unterschiedliche Randbedingungen angepasst werden kann.

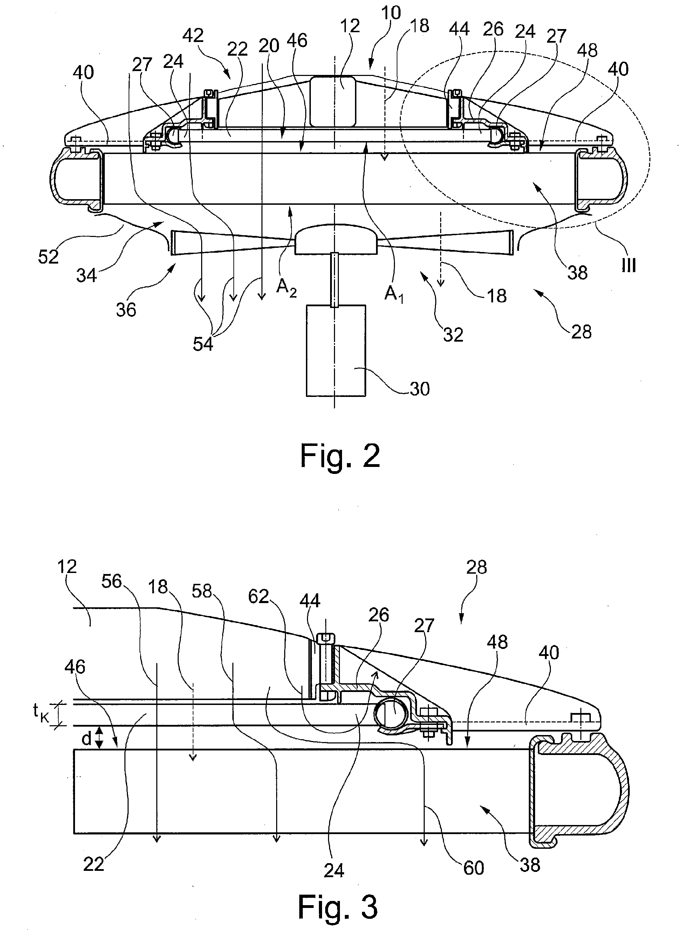

Der Modulrahmen 26 weist Vorsprünge 40 zur Montage des Kühlmoduls 10 am Motorkühler 38 auf (siehe auch Figuren 2 bis 4), wobei sich die Vorsprünge 40 quer zur Luftströmungsrichtung 18 erstrecken.

Ferner weist der Modulrahmen 26 einen kreiszylindrischen Luftkanal 42 auf, in dem der Lüfter 12 befestigt ist, wobei der Luftkanal 42 den Lufteinlass 14 und den Luftauslass 16 des Lüfters 12 definiert. Im vorliegenden Ausführungsbeispiel ist der Lüfter 12 durch einen Lüfterring 44 sowohl formschlüssig als auch durch eine Schraubverbindung im Luftkanal 42 des Modulrahmens 26 befestigt (siehe auch Figuren 2 und 3).

Der Kondensator 20 weist Kältemittel-Sammelleitungen 27 auf, über die er fest mit dem Modulrahmen 26 verbunden, insbesondere verschraubt oder verspannt ist (siehe auch Figuren 2 und 3).

Die Figur 2 zeigt eine Baugruppe 28 zur Kühlung eines Kraftfahrzeugmotors 30, insbesondere eines LKW-Motors, mit einem Kühlerventilator 32, der einen Ventilatoreinlass 34 sowie einen Ventilatorauslass 36 aufweist und einen Luftstrom in der Luftströmungsrichtung 18 vom Ventilatoreinlass 34 zum Ventilatorauslass 36 erzeugt, sowie einem luftdurchströmbaren Motorkühler 38 zum Abkühlen eines Kühlmittels für den Kraftfahrzeugmotor 30, der einen Luftströmungsquerschnitt A2 aufweist und angrenzend an den Ventilatoreinlass 34 stromaufwärts des Kühlerventilators 32 angeordnet ist.

Ferner ist ein Montageelement 52 vorgesehen, welches den Kühlerventilator 32 mit dem Motorkühler 38 verbindet. Insbesondere umschließt das Montageelement 52 den Luftströmungsquerschnitt A2 des Motorkühlers 38 und verjüngt sich zum Kühlerventilator 32 hin trichterförmig, sodass der Kühlerventilator 32 den gesamten Luftströmungsquerschnitt A2 saugseitig beaufschlagt.

Der Kühlerventilators 32 ist gemäß Figur 2 mit dem Kraftfahrzeugmotor 30 antriebsmäßig verbunden. Demzufolge wird der Kühlerventilator 32 im Fahrbetrieb (d.h. bei laufendem Kraftfahrzeugmotor 30) durch den Kraftfahrzeugmotor 30 angetrieben und ist im Parkzustand des Fahrzeugs (d.h. bei abgestelltem Kraftfahrzeugmotor 30) deaktiviert.

Die Baugruppe 28 zur Kühlung eines Kraftfahrzeugmotors 30 umfasst außerdem das Kühlmodul 10, welches sich vom Kühlmodul 10 gemäß Figur 1 lediglich dadurch unterscheidet, dass der Lüfter 12 gemäß Figur 2 nur aus einem einzigen Axialventilator besteht.

Der Kondensator 20 des Kühlmoduls 10 ist gemäß Figur 2 stromaufwärts des Motorkühlers 38 angeordnet und grenzt unmittelbar an den Motorkühler 38 an. Über die Pfeile 54 ist ein Luftstrom im Fahrbetrieb, d.h. bei aktiviertem Kühlerventilator 32 und deaktiviertem Lüfter 12 angedeutet.

Die Figur 3 zeigt das Detail III der Baugruppe 28 zur Kühlung des Kraftfahrzeugmotors 30 gemäß Figur 2. Dabei ist über die Pfeile 56, 58, 60 und 62 ein Luftstrom im Parkzustand des Fahrzeugs bei aktivierter Klimaanlage, d.h. bei aktiviertem Lüfter 12 und deaktiviertem Kühlerventilator 32 angedeutet.

Der Kondensator 20 des Kühlmoduls 10 weist in der Luftströmungsrichtung 18 einen Abstand d vom Motorkühler 38 auf, wobei gilt: d > 6 mm, insbesondere 8 mm ≤ d ≤ 20 mm. Dieser Abstand d reicht aus, um den in der Luftströmungsrichtung 18 durch den ersten Teilquerschnitt 22 des Kondensators 20 geförderten Luftstrom stromabwärts des Kondensators 20 zu verteilen (Pfeil 60) sowie eine Rückströmung entgegen der Luftströmungsrichtung 18 über den zweiten Teilquerschnitt 24 des Kondensators 20 zu ermöglichen (Pfeil 62). Der dadurch verringerte Strömungswiderstand des Kondensators 20 trägt zu einem besonders energieeffizienten Betrieb des Kühlmoduls 10 bei abgestelltem Kraftfahrzeugmotor 30 bei.

Bei einem Vergleich der Figuren 2 und 3 wird deutlich, dass der zweite Teilquerschnitt 24 des Luftströmungsquerschnitts A1 des Kondensators 20 im Fahrbetrieb des Fahrzeugs gemäß Figur 2 in der Luftströmungsrichtung 18 und im Parkzustand des Fahrzeugs gemäß Figur 3 entgegen der Luftströmungsrichtung 18 durchströmt wird.

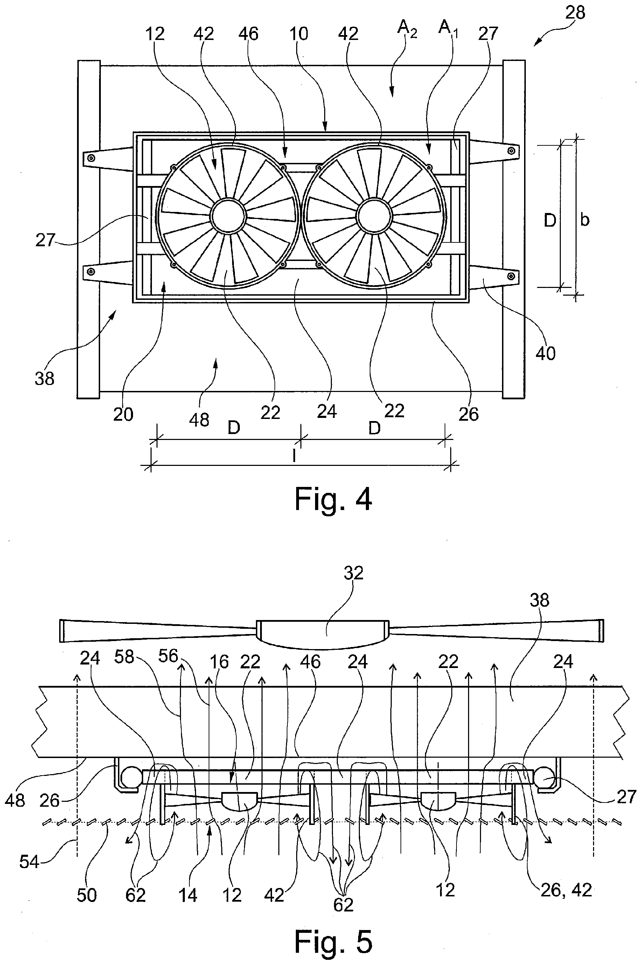

Die Figur 4 zeigt eine Ansicht der Baugruppe 28 zur Kühlung des Kraftfahrzeugmotors 30 in der Luftströmungsrichtung 18, mit dem Kühlmodul 10 gemäß Figur 1. Anhand dieser Ansicht wird deutlich, dass der Kondensator 20 einen rechteckigen Luftströmungsquerschnitt A1 mit einer Länge I sowie einer Breite b und der Lüfter 12 zwei Axialventilatoren mit einem Durchmesser D aufweist, wobei gilt: 0,75 ≤ Db/b ≤ 1, insbesondere 0,85 ≤ Db/b ≤ 0,95. Der Wert Db entspricht dabei der Summe der Durchmesser D aller Axialventilatoren des Lüfters 12, die in Richtung der Breite b des Kondensators 20 nebeneinander angeordnet sind. Im vorliegenden Ausführungsbeispiel sind die Werte Db und D identisch, da in Richtung der Breite b lediglich ein Axialventilator vorgesehen ist.

Außerdem gilt für das Kühlmodul 10 gemäß Figur 4 auch 0,75 ≤ Dl/l ≤ 1, insbesondere 0,85 ≤ Dl/l ≤ 0,95. Der Wert Dl entspricht dabei der Summe der Durchmesser D aller Axialventilatoren des Lüfters 12, die in Richtung der Länge l des Kondensators 20 nebeneinander angeordnet sind. Im vorliegenden Ausführungsbeispiel gilt: Dl = 2D, da in Richtung der Länge l zwei Axialventilatoren vorgesehen sind.

Gemäß Figur 4 weist der Luftströmungsquerschnitt A2 des Motorkühlers 38 einen ersten Teilquerschnitt 46 und einen vom ersten Teilquerschnitt 46 verschiedenen zweiten Teilquerschnitt 48 auf, wobei der erste Teilquerschnitt 46 vom Kühlmodul 10 abgedeckt ist und der zweite Teilquerschnitt 48 frei an einen Kühlergrill 50 (siehe Figur 5) des Fahrzeugs angrenzt. Der Luftströmungsquerschnitt A2 des Motorkühlers 38 ist dabei wenigstens eineinhalbmal so groß, insbesondere wenigstens doppelt so groß wie der Luftströmungsquerschnitt A1 des Kondensators 20.

Wird der Luftströmungsquerschnitt A1 des Kondensators 20 so gewählt, dass sich sowohl bei laufendem als auch bei abgestelltem Kraftfahrzeugmotor 30 eine zufriedenstellende Kühlleistung der Fahrzeugklimaanlage ergibt, dann lässt sich über das angegebene Größenverhältnis der Luftströmungsquerschnitte A1, A2 auch eine ausreichende Kühlung des Kraftfahrzeugmotors 30 im Volllastbetrieb des Kraftfahrzeugs gewährleisten.

Die Figur 5 zeigt einen schematischen Schnitt durch die Baugruppe 28 gemäß Figur 4, wobei mit Bezug auf die Luftströmungsrichtung 18 stromaufwärts des Lüfters 12 der Kühlergrill 50 des Fahrzeugs angedeutet ist. Der Luftkanal 42 definiert dabei den Lufteinlass 14 des Lüfters 12 und grenzt in diesem Bereich an den Kühlergrill 50 des Fahrzeugs an. Insbesondere ist der Luftkanal 42 im Bereich des Lufteinlasses 14 dicht mit dem Kühlergrill 50 verbunden.

Der Luftkanal 42 definiert außerdem auch den Luftauslass 16 des Lüfters 12 und grenzt in diesem Bereich an den Kondensator 20 an. Insbesondere ist der Luftkanal 42 im Bereich des Luftauslasses 16 dicht mit dem Kondensator 20 verbunden.

## Patentansprüche

1. Baugruppe (28) zur Kühlung eines Kraftfahrzeugmotors (30), mit einem Kühlerventilator (32), der mit dem Kraftfahrzeugmotor (30) antriebsmäßig verbunden ist und der einen Ventilatoreinlass (34) sowie einen Ventilatorauslass (36) aufweist und einen Luftstrom in einer Luftströmungsrichtung vom Ventilatoreinlass (34) zum Ventilatorauslass (36) erzeugt,
mit einem luftdurchströmbaren Motorkühler (38) zum Abkühlen eines Kühlmittels eines Kraftfahrzeugmotors (30), wobei der Motorkühler (38) einen Luftströmungsquerschnitt (A₂) aufweist und angrenzend an den Ventilatoreinlass (34) des Kühlerventilators (32) angeordnet ist, und
mit einem Kühlmodul (10) einer Fahrzeugklimaanlage, mit
einem Lüfter (12), der einen Lufteinlass (14) sowie einen Luftauslass (16) aufweist und einen Luftstrom in einer Luftströmungsrichtung (18) vom Lufteinlass (14) zum Luftauslass (16) erzeugt, sowie
einem bidirektional luftdurchströmbaren Kondensator (20) zum Verflüssigen eines Kältemittels der Fahrzeugklimaanlage, der stromaufwärts des Motorkühlers (38) angeordnet ist und an diesen angrenzt, wobei der Kondensator (20) einen Luftströmungsquerschnitt (A₁) aufweist und angrenzend an den Luftauslass (16) des Lüfters (12) angeordnet ist,
wobei der Luftströmungsquerschnitt (A₁) einen ersten Teilquerschnitt (22) und einen vom ersten Teilquerschnitt (22) verschiedenen zweiten Teilquerschnitt (24) aufweist,
wobei der Luftauslass (16) des Lüfters (12) ausschließlich dem ersten Teilquerschnitt (22) zugeordnet ist und diesen in Luftströmungsrichtung (18) mit dem gesamten Luftstrom des Lüfters (12) beaufschlagt, und das Kühlmodul (10) mit dem Kühlerventilator (32) zusammenwirkt,
**dadurch gekennzeichnet, dass** der Kondensator (20) des Kühlmoduls (10) in Luftströmungsrichtung (18) einen Abstand (d) vom Motorkühler (38) aufweist, wobei gilt: d > 6 mm, und der Kühlerventilator (32) in einem Fahrbetrieb bei laufendem Kraftfahrzeugmotor (30) angetrieben ist und bei abgestelltem Kraftfahrzeugmotor (30), was einen Parkzustand darstellt, deaktiviert ist und ein Luftstrom den zweiten Teilquerschnitt (24) des Luftströmungsquerschnitts (A₁) des Kondensators (20) im Fahrbetrieb in der Luftströmungsrichtung (18) und im Parkzustand entgegen der Luftströmungsrichtung (18) durchströmt, wobei letzteres dadurch geschieht, dass die vom Lüfter (12) in der Luftströmungsrichtung (18) durch den Kondensator (20) geförderte Luft über den zweiten Teilquerschnitt (24) zumindest teilweise wieder zurückströmt.

2. Baugruppe (28) nach Anspruch 1, **dadurch gekennzeichnet, dass** der Lüfter (12) ein elektromotorisch angetriebener Lüfter (12) ist.

3. Baugruppe (28) nach Anspruch 1 oder 2, **dadurch gekennzeichnet, dass** der Kondensator (20) in Luftströmungsrichtung (18) eine Abmessung (t_{K}) aufweist, mit t_{K} ≤ 20 mm, insbesondere 10 mm ≤ t_{K} ≤ 16 mm.

4. Baugruppe (28) nach einem der vorhergehenden Ansprüche, **dadurch gekennzeichnet, dass** der Lüfter (12) und der Kondensator (20) in einem Modulrahmen (26) aufgenommen sind und mit dem Modulrahmen (26) eine vormontierte Einheit bilden.

5. Baugruppe (28) nach Anspruch 4, **dadurch gekennzeichnet, dass** der Modulrahmen (26) Vorsprünge (40) zur Montage des Kühlmoduls (10) an einem Motorkühler (38) aufweist, wobei sich die Vorsprünge (40) quer zur Luftströmungsrichtung (18) erstrecken.

6. Baugruppe (28) nach Anspruch 4 oder 5, **dadurch gekennzeichnet, dass** der Modulrahmen (26) einen Luftkanal (42) aufweist, in welchem der Lüfter (12) befestigt ist, wobei der Luftkanal (42) den Lufteinlass (14) und den Luftauslass (16) des Lüfters (12) definiert.

7. Baugruppe (28) nach einem der Ansprüche 4 bis 6, **dadurch gekennzeichnet, dass** der Modulrahmen (26) ein Kunststoffspritzteil ist.

8. Baugruppe (28) nach einem der vorhergehenden Ansprüche, **dadurch gekennzeichnet, dass** der Kondensator (20) einen im Wesentlichen rechteckigen Luftströmungsquerschnitt (A₁) mit einer Länge (l) sowie einer Breite (b) aufweist und der Lüfter (12) wenigstens einen Axialventilator mit einem Durchmesser (D) aufweist, wobei gilt: 0,75 ≤ Dₗ/l ≤ 1, insbesondere 0,85 ≤ Dₗ/l ≤ 0,95 und/oder 0,75 ≤ D_{b}/b ≤ 1, insbesondere 0,85 ≤ D_{b}/b ≤ 0,95, wobei Dₗ und D_{b} der Summe der Durchmesser D aller Axialventilatoren des Lüfters (12) entspricht, die in Richtung der Länge (l) bzw. Breite (b) des Kondensators (20) nebeneinander angeordnet sind.

9. Baugruppe (28) nach einem der vorhergehenden Ansprüche, **dadurch gekennzeichnet, dass** der Lufteinlass (14) des Lüfters (12) an einen Kühlergrill (50) des Fahrzeugs angrenzt, insbesondere dicht mit dem Kühlergrill (50) verbunden ist.

10. Baugruppe (28) nach einem der vorhergehenden Ansprüche, **dadurch gekennzeichnet, dass** der Luftauslass (16) des Lüfters (12) an den Kondensator (20) angrenzt, insbesondere dicht mit dem Kondensator (20) verbunden ist.

11. Baugruppe (28) nach einem der vorhergehenden Ansprüche, **dadurch gekennzeichnet, dass** ein Montageelement (52) vorgesehen ist, welches den Kühlerventilator (32) mit dem Motorkühler (38) verbindet.

12. Baugruppe (28) nach einem der vorhergehenden Ansprüche, **dadurch gekennzeichnet, dass** der Luftströmungsquerschnitt (A₂) des Motorkühlers (38) einen ersten Teilquerschnitt (46) und einen vom ersten Teilquerschnitt (46) verschiedenen zweiten Teilquerschnitt (48) aufweist, wobei der erste Teilquerschnitt (46) vom Kühlmodul (10) abgedeckt ist und der zweite Teilquerschnitt (48) frei an einen Kühlergrill (50) des Fahrzeugs angrenzt.

13. Baugruppe (28) nach einem der vorhergehenden Ansprüche, **dadurch gekennzeichnet, dass** der Luftströmungsquerschnitt (A₂) des Motorkühlers (38) wenigstens eineinhalb Mal so groß, insbesondere wenigstens doppelt so groß ist wie der Luftströmungsquerschnitt (A₁) des Kondensators (20).

## Claims

1. An assembly (28) for cooling a motor vehicle engine (30), comprising a radiator fan (32) which is drivingly connected to the motor vehicle engine (30) and which includes a fan inlet (34) and a fan outlet (36) and generates an air flow in an air flow direction from the fan inlet (34) to the fan outlet (36),
comprising an engine radiator (38) adapted for air flow therethrough, for cooling a coolant of a motor vehicle engine (30), the engine radiator (38) having an air flow cross-section (A₂) and being arranged adjacent to the fan inlet (34) of the radiator fan (32), and
comprising a cooling module (10) of a vehicle air-conditioning system, having a ventilator (12) which includes an air inlet (14) and an air outlet (16) and generates an air flow in an air flow direction (18) from the air inlet (14) to the air outlet (16), and
a condenser (20) adapted for bidirectional air flow therethrough, for condensing a refrigerant of the vehicle air-conditioning system, the condenser (20) being arranged upstream of, and adjacent to, the engine radiator (38), the condenser (20) having an air flow cross-section (A₁) and being arranged adjacent to the air outlet (16) of the ventilator (12),
the air flow cross-section (A₁) having a first partial cross-section (22) and a second partial cross-section (24) that is different from the first partial cross-section (22),
the air outlet (16) of the ventilator (12) being exclusively assigned to the first partial cross-section (22) and supplying the total air flow of the ventilator (12) to the first partial cross-section (22) in the air flow direction (18), and the cooling module (10) cooperating with the radiator fan (32),
**characterized in that** the condenser (20) of the cooling module (10) has a distance (d) from the engine radiator (38) in the air flow direction (18), where: d > 6 mm, and the radiator fan (32) is driven in a driving operation with the motor vehicle engine (30) running and is deactivated when the motor vehicle engine (30) has been turned off, which constitutes a parking state, and an air flow flows through the second partial cross-section (24) of the air flow cross-section (A₁) of the condenser (20) in the air flow direction (18) in the driving operation and contrary to the air flow direction (18) in the parking state, the latter being effected **in that** the air conveyed by the ventilator (12) through the condenser (20) in the air flow direction (18) flows at least partly back again through the second partial cross-section (24).

2. The assembly (28) according to claim 1, **characterized in that** the ventilator (12) is an electric motor driven ventilator (12).

3. The assembly (28) according to claim 1 or 2, **characterized in that** the condenser (20) has a dimension (t_{K}) in the air flow direction (18), where t_{K} ≤ 20 mm, in particular 10 mm ≤ tK ≤ 16 mm.

4. The assembly (28) according to any of the preceding claims, **characterized in that** the ventilator (12) and the condenser (20) are received in a module frame (26) and form a preassembled unit with the module frame (26).

5. The assembly (28) according to claim 4, **characterized in that** the module frame (26) has projections (40) for mounting the cooling module (10) to an engine radiator (38), the projections (40) extending transversely to the air flow direction (18).

6. The assembly (28) according to claim 4 or 5, **characterized in that** the module frame (26) includes an air duct (42) in which the ventilator (12) is fastened, the air duct (42) defining the air inlet (14) and the air outlet (16) of the ventilator (12).

7. The assembly (28) according to any of claims 4 to 6, **characterized in that** the module frame (26) is an injection-molded plastic part.

8. The assembly (28) according to any of the preceding claims, **characterized in that** the condenser (20) has a substantially rectangular air flow cross-section (A₁) having a length (l) and a width (b) and the ventilator (12) includes at least one axial fan having a diameter (D), where: 0.75 ≤ Dₗ/l ≤ 1, in particular 0.85 ≤ Dₗ/l ≤ 0.95 and/or 0.75 ≤ D_{b}/b ≤ 1, in particular 0.85 ≤ D_{b}/b ≤ 0.95, with Dₗ and D_{b} corresponding to the sum of the diameters D of all axial fans of the ventilator (12) which are arranged next to each other in the direction of the length (l) or width (b) of the condenser (20).

9. The assembly (28) according to any of the preceding claims, **characterized in that** the air inlet (14) of the ventilator (12) is adjacent to a radiator grille (50) of the vehicle, in particular is tightly connected with the radiator grille (50).

10. The assembly (28) according to any of the preceding claims, **characterized in that** the air outlet (16) of the ventilator (12) is adjacent to the condenser (20), in particular is tightly connected with the condenser (20).

11. The assembly (28) according to any of the preceding claims, **characterized in that** a mounting element (52) is provided which connects the radiator fan (32) with the engine radiator (38).

12. The assembly (28) according to any of the preceding claims, **characterized in that** the air flow cross-section (A₂) of the engine radiator (38) has a first partial cross-section (46) and a second partial cross-section (48) that is different from the first partial cross-section (46), the first partial cross-section (46) being covered by the cooling module (10) and the second partial cross-section (48) being freely adjacent to a radiator grille (50) of the vehicle.

13. The assembly (28) according to any of the preceding claims, **characterized in that** the air flow cross-section (A₂) of the engine radiator (38) is at least one and a half times as large, more particularly at least twice as large as the air flow cross-section (A₁) of the condenser (20).

## Revendications

1. Ensemble (28) pour le refroidissement d'un moteur (30) de véhicule automobile, comprenant un ventilateur de radiateur (32) qui est relié, en termes d'entraînement, au moteur (30) de véhicule automobile et qui présente une entrée de ventilateur (34) et une sortie de ventilateur (36) et qui génère un flux d'air dans un sens d'écoulement d'air depuis l'entrée de ventilateur (34) à la sortie de ventilateur (36),
comprenant un radiateur de moteur (38) apte à être traversé par de l'air pour refroidir un agent réfrigérant d'un moteur (30) de véhicule automobile, le radiateur de moteur (38) présentant une section d'écoulement d'air (A₂) et étant agencé adjacent à l'entrée de ventilateur (34) du ventilateur de radiateur (32), et
comprenant un module de refroidissement (10) d'une installation de climatisation de véhicule, comprenant
une soufflante (12) qui présente une entrée d'air (14) et une sortie d'air (16) et génère un flux d'air dans un sens d'écoulement d'air (18) depuis l'entrée d'air (14) à la sortie d'air (16), et
un condenseur (20) qui est apte à être traversé par de l'air de manière bidirectionnelle pour condenser un agent réfrigérant de l'installation de climatisation de véhicule et qui est agencé en amont du radiateur de moteur (38) et est adjacent à celui-ci, le condenseur (20) présentant une section d'écoulement d'air (A₁) et étant agencé adjacent à la sortie d'air (16) de la soufflante (12),
la section d'écoulement d'air (A₁) présentant une première section partielle (22) et une deuxième section partielle (24) différente de la première section partielle (22),
la sortie d'air (16) de la soufflante (12) étant exclusivement associée à la première section partielle (22) et appliquant sur celle-ci l'ensemble du flux d'air de la soufflante (12) dans le sens d'écoulement d'air (18), et le module de refroidissement (10) coopérant avec le ventilateur de radiateur (32),
**caractérisé en ce que** le condenseur (20) du module de refroidissement (10) présente, dans le sens d'écoulement d'air (18), une distance (d) du radiateur de moteur (38), avec : d > 6mm, et le ventilateur de radiateur (32) est entraîné lors d'un fonctionnement en marche lorsque le moteur (30) de véhicule automobile tourne, et est désactivé lorsque le moteur (30) de véhicule automobile est à l'arrêt, ce qui correspond à un état de stationnement, et **en ce qu'**un flux d'air traverse la deuxième section partielle (24) de la section d'écoulement d'air (A₁) du condenseur (20) dans le sens d'écoulement d'air (18) lors du fonctionnement en marche, et la traverse à l'encontre du sens d'écoulement d'air (18) à l'état de stationnement, ceci étant réalisé par un retour au moins partiel via la deuxième section partielle (24) de l'air acheminé par la soufflante (12) à travers le condenseur (20) dans le sens d'écoulement d'air (18).

2. Ensemble (28) selon la revendication 1, **caractérisé en ce que** la soufflante (12) est une soufflante (12) entraînée par moteur électrique.

3. Ensemble (28) selon la revendication 1 ou 2, **caractérisé en ce que** le condenseur (20) présente, dans le sens d'écoulement d'air (18), une dimension (t_{K}), avec t_{K} ≤ 20mm, en particulier 10mm ≤ t_{K} ≤ 16mm.

4. Ensemble (28) selon l'une des revendications précédentes, **caractérisé en ce que** la soufflante (12) et le condenseur (20) sont reçus dans un cadre de module (26) et forment une unité préassemblée avec le cadre de module (26).

5. Ensemble (28) selon la revendication 4, **caractérisé en ce que** le cadre de module (26) présente des saillies (40) pour le montage du module de refroidissement (10) sur un radiateur de moteur (38), les saillies (40) s'étendant transversalement au sens d'écoulement d'air (18).

6. Ensemble (28) selon la revendication 4 ou 5, **caractérisé en ce que** le cadre de module (26) présente un canal d'air (42) dans lequel la soufflante (12) est fixée, le canal d'air (42) définissant l'entrée d'air (14) et la sortie d'air (16) de la soufflante (12).

7. Ensemble (28) selon l'une des revendications 4 à 6, **caractérisé en ce que** le cadre de module (26) est une pièce en plastique moulée par injection.

8. Ensemble (28) selon l'une des revendications précédentes, **caractérisé en ce que** le condenseur (20) présente une section d'écoulement d'air (A₁) sensiblement rectangulaire avec une longueur (l) et une largeur (b), et la soufflante (12) présente au moins un ventilateur axial présentant un diamètre (D), avec : 0,75 ≤ Dₗ/l ≤ 1, en particulier 0,85 ≤ Dₗ/l ≤ 0,95, et/ou 0,75 ≤ D_{b}/b ≤ 1, en particulier 0,85 ≤ D_{b}/b ≤ 0,95, Dₗ et D_{b} correspondant à la somme des diamètres D de tous les ventilateurs axiaux de la soufflante (12) qui sont agencés les uns à côté des autres dans le sens de la longueur (l) et de la largeur (b), respectivement, du condenseur (20).

9. Ensemble (28) selon l'une des revendications précédentes, **caractérisé en ce que** l'entrée d'air (14) de la soufflante (12) est adjacente à une grille de radiateur (50) du véhicule et est en particulier reliée de manière étanche à la grille de radiateur (50).

10. Ensemble (28) selon l'une des revendications précédentes, **caractérisé en ce que** la sortie d'air (16) de la soufflante (12) est adjacente au condenseur (20) et est en particulier reliée de manière étanche au condenseur (20).

11. Ensemble (28) selon l'une des revendications précédentes, **caractérisé en ce qu'**il est prévu un élément de montage (52) qui relie le ventilateur de radiateur (32) au radiateur de moteur (38).

12. Ensemble (28) selon l'une des revendications précédentes, **caractérisé en ce que** la section d'écoulement d'air (A₂) du radiateur de moteur (38) présente une première section partielle (46) et une deuxième section partielle (48) différente de la première section partielle (46), la première section partielle (46) étant recouverte du module de refroidissement (10), et la deuxième section partielle (48) étant librement adjacente à une grille de radiateur (50) du véhicule.

13. Ensemble (28) selon l'une des revendications précédentes, **caractérisé en ce que** la section d'écoulement d'air (A₂) du radiateur de moteur (38) est au moins une fois et demie plus grande, en particulier au moins deux fois plus grande que la section d'écoulement d'air (A₁) du condenseur (20).
